Europäisches Patentamt

European Patent Office

Office européen des brevets

(19)

(11) Veröffentlichungsnummer: **0 138 119**
**B1**

## (12) EUROPÄISCHE PATENTSCHRIFT

(45) Veröffentlichungstag der Patentschrift:
**07.01.88**

(21) Anmeldenummer: **84111561.1**

(22) Anmeldetag: **27.09.84**

(51) Int. Cl.⁴: **A 61 C 17/02**

(54) **Zahnärztliches Spritzhandstück.**

(30) Priorität: **12.10.83 DE 3337166**

(43) Veröffentlichungstag der Anmeldung:
**24.04.85 Patentblatt 85/17**

(45) Bekanntmachung des Hinweises auf die Patenterteilung:
**07.01.88 Patentblatt 88/1**

(84) Benannte Vertragsstaaten:
**AT CH DE FR GB IT LI SE**

(56) Entgegenhaltungen:
EP - A - 0 088 298
DE - A - 1 566 116
DE - A - 2 024 195
DE - A - 3 003 187
DE - C - 572 478
FR - A - 2 059 113
US - A - 3 261 356
US - A - 4 330 274
US - A - 4 375 964

(73) Patentinhaber: **Siemens Aktiengesellschaft Berlin und München, Wittelsbacherplatz 2, D-8000 München 2 (DE)**

(72) Erfinder: **Weber, Walter, Goldregenstrasse 4, D-6143 Lorsch (DE)**
Erfinder: **Frank-Vöglein, Doris, Gartenfeld 8a, D-6144 Zwingenberg (DE)**

## Beschreibung

Die Erfindung bezieht sich auf ein zahnärztliches Spritzhandstück für Luft und/oder Wasser mit einem Griffkörper, an dessen geradem einem Ende ein Versorgungsschlauch anschliessbar ist und an dessen geradem oder abgewinkeltem Ende eine gegen den Griffkörper drehbare und von dessem abnehmbare Düse an- und abkuppelbar gehaltert ist. Ein solches Spritzhandstück ist z.B. aus US-A-4 149 315 bekannt.

Um bei Gebrauch eines solchen Spritzhandstückes das Arbeitsfeld im Bereich der Mundhöhle besser betrachten zu können, ist es bisher notwendig gewesen, ein zusätzliches Handstück mit einer Beleuchtungseinrichtung, z.B. in Form eines Lichtleiterhandstückes, wie beispielsweise aus US-A-3 614 415 bekannt, vorzusehen. Mit solchen punktuellen Beleuchtungseinrichtungen können insbesondere jene Stellen der Mundhöhle optimal beleuchtet werden, die mit den normalen Arbeitsfeldleuchten nicht bzw. nicht ausreichend zufriedenstellend ausgeleuchtet werden können, sei es, weil beim Arbeiten mit den Instrumenten an der unmittelbaren Präparationsstelle unter Umständen Schlagschatten entsteht oder sei es, weil die Leuchtstärke nicht ausreicht, um die Kavität ausreichend auszuleuchten.

Aus der US-A-2 522 261 ist zwar ein mit einer Beleuchtungseinrichtung ausgestattetes zahnärztliches Handstück bekannt, welches auch zur Abgabe von Luft und Wasser ausgebildet ist; dieses Handstück dient jedoch hauptsächlich zum Absaugen von Flüssigkeit aus der Mundhöhle eines Patienten. Das Handstück besteht demnach im wesentlichen aus einem bis zu einem Absaugmundstück führenden zentralen Absaugrohr mit einem rohrförmigen Handgriff und einem daran angeschraubten abgewinkelten Rohrabschnitt mit dem Absaugmundstück. Die Zufuhr von Luft und Wasser erfolgt mittels aussen am Rohr befestigter Zufuhrleitungen. Die Beleuchtungseinrichtung besteht aus einer am waagrechten Teil des abgewinkelten Mundstückes und innerhalb des zur Absaugung vorgesehenen Absaugrohres angeordneten Lampe. Die Lampe wird mittels im Saugkanal geführter elektrischer Leitungen mit Spannung versorgt und ist in einer entsprechend ausgebildeten Halterung auswechselbar gehaltert. Das Absaugmundstück lässt sich zusammen mit der Lampe und den Medienleitungsenden nach beiden Seiten verschwenken. Nachteilig ist, dass bei einem Verschwenken des Mundstückes die Medienzufuhrleitung in sich verdreht und dadurch deren freie Querschnitte eingeengt werden, wodurch unter Umständen die Medienzufuhr unterbrochen werden kann. Die aussen am Absaugrohr entlang befestigten Medienleitungen sind ausserdem störend.

Aus der US-A-4 330 274 ist ferner ein zahnärztliches Turbinenhandstück mit zwischen Handstück und Versorgungsschlauch angeordneter Beleuchtungseinrichtung bekannt. Das Handstück enthält einen aussermittig angeordneten Lichtleiter, dem eine ebenfalls aussermittig angeordnete Lampe eines an das Handstück anzuschliessenden Lampenblockes zugeordnet ist. Lampenblock und Handstück sind demnach nicht gegeneinander frei drehbar. Diese bekannte Beleuchtungseinrichtung verfolgt das Ziel, an den Lampenblock sowohl Standardhandstücke mit intern geführten, lichtweiterführenden Elementen als auch Handstücke mit extern des Handstückes geführten Lichtleitern anschliessen zu können. Eine Anwendung der aus dieser Druckschrift entnehmbaren Lehre auf ein zahnärztliches Spritzhandstück würde bedeuten, an dem dem Versorgungsschlauch zugewandten Ende des Spritzhandstückes einen die Lichtquelle enthaltenden Lampenblock vorzusehen, auf den das Spritzhandstück unverdrehbar aufsetzbar ist.

Der im Anspruch 1 angegebenen Erfindung liegt die Aufgabe zugrunde, den Gebrauchswert eines zahnärztlichen Spritzhandstückes, welches ausschliesslich zur Abgabe von Spritzmittel dient, dahingehend zu verbessern, dass zum Ausleuchten und Betrachten der Präparationsstelle während bzw. nach unmittelbarer Benutzung der Spritze kein separates Beleuchtungsinstrument notwendig ist, wobei die vorzusehenden Massnahmen sich nicht nachteilig auf die äussere Gestaltung des Spritzhandstückes auswirken dürfen, d.h. die Massnahmen dürfen weder die Baulänge des Spritzhandstückes vergrössern noch auf das Handstück aussen aufsetzbare und damit ab- bzw. vorstehende Teile enthalten. Ebenso ist ein Verdrehen der Medienleitungen, wie vorstehend erwähnt, zu vermeiden.

Die erfindungsgemäss vorgeschlagene integrierte Beleuchtungseinrichtung kann vorteilhafterweise so ausgebildet sein, dass im Griffkörper der Spritze ein lichtabgebendes Element, vorzugsweise eine elektrische Glühbirne, angeordnet ist und als lichtweiterführendes Element in der abnehmbar gehalterten Düse ein Lichtleiter, vorzugsweise ein Glasfaserlichtleiter, angeordnet ist, dessen eines Ende mit dem Düsenende abschliesst und dessen anderes Ende zentrisch in einem Steckzapfen endet und dort dem Lichtzuführungselement im Griffkörper korrespondierend gegenübersteht. Die Lampenhalterung ist vorteilhafterweise auswechselbar ausgeführt, insbesondere konstruktiv so gestaltet, dass man durch blosses Weglassen bzw. Hinzufügen des Lampenhalterungteils ohne Beeinträchtigung des Medienflusses werksseitig oder auch nachträglich wahlweise ein Spritzhandstück ohne bzw. mit Beleuchtungsvorrichtung versehen kann. Die Lampenhalterung ist zu diesem Zweck als leicht auszuwechselndes Einsatzteil, vorzugsweise patronenartig, ausgebildet.

Die Führung des Lichtleiters in der Düse des Spritzhandstückes kann vorteilhafterweise konzentrisch zu den Luft- und Wasseraustrittsöffnungen liegen oder auch neben diesen Öffnungen verlaufen, z.B. in Form von zwei oder mehreren sichelförmigen, runden oder anders gestalteten Abschnitten, die um die Düsenöffnungen herum angeordnet sind.

Besondere Vorteile lassen sich erzielen, wenn stirnseitig in dem Hohlraum, in den der Führungszapfen der Düse eingreift, die Lampe angeordnet ist und in diesen Hohlraum auch die Luftzuführung aus dem Griffkörper frei mündet. Durch diese Massnahme erhält einerseits die Lampe eine ausreichende Kühlung, wodurch deren Lebensdauer erhöht wird; andererseits wird die Luft zusätzlich geringfügig noch erwärmt. Vorteilhafterweise ist das lichtzuführende Element in einem Zwischenstück angeordnet, welches den Übergang vom geraden zum abgewinkelten Handstückteil herstellt. Dieses Zwischenstück ist mittels Steckverbindung vom Ventileinsatz sowohl hinsichtlich der fluiden Medien als auch hinsichtlich der elektrischen Kontaktierung leicht lösbar, so dass, nachdem das Zwischenstück als billig herzustellendes Spritzteil konzipiert sein kann, denkbar ist, die Lampe fest im Zwischenstück anzuordnen und bei einem Defekt der Lampe das gesamte Zwischenstück leicht auszuwechseln.

Alternativ zu der Anordnung der Lampe im Zwischenstück kann diese auch in der Düse oder im Ventileinsatz vorgesehen sein. Bei Anordnung der Lampe in der Düse erfolgt die Stromzuführung über Schleifringe; wenn die Lampe im Ventileinsatz angeordnet ist, erfolgt die Lichtübertragung im Zwischenstück durch einen entsprechend gestalteten Lichtleiter, der in dem besagten Hohlraum, in den der Zapfen der Düse eingreift, endet. Das Ein- und Ausschalten der Lampe kann vorteilhafterweise mittels eines in unmittelbarer Nähe der Schaltelemente für Luft und Wasser angeordneten Schalters oder einer Taste vorgenommen werden; wenn dieser Schalter bzw. die Taste von Betätigungselementen für Luft und Wasser vorgelagert ist, kann das Licht sowohl getrennt als auch zusammen mit den Medien Luft und Wasser bequem mit dem Daumen geschaltet werden.

Die Erfindung wird nachfolgend anhand der Zeichnung an mehreren Ausführungsbeispielen näher erläutert. Es zeigen:

Figur 1 das erfindungsgemässe Spritzhandstück in teilweise demontiertem Zustand,

Figur 2 ein Teil (Zwischenstück) des in Figur 1 gezeigten Spritzhandstückes in schaubildlicher Darstellung,

Figur 3 einen Teil des Spritzhandstückes im montierten Zustand, teilweise im Längsschnitt, mit Darstellung der Beleuchtungseinrichtung,

Figur 4 den vorderen Teil der Düse im Längsschnitt,

Figur 5 einen Schnitt entlang der Linie V–V in Figur 4,

Figuren 6 und 7 Varianten einer Anordnung des Lichtleiters am Düsenende,

Figuren 8 bis 10 das Zwischenstück in Front-, Seiten- und Rückansicht,

Figur 11 einen Teil des Ventileinsatzes mit einer anderen Ausführungsform der Beleuchtungseinrichtung,

Figuren 12 und 13 das Zwischenstück in Front-und Seitenansicht mit einer anderen Ausführung der Beleuchtungseinrichtung,

Figur 14 einen Teil des Spritzhandstückes im montierten Zustand, teilweise im Längsschnitt, mit einer weiteren Ausführungsform der Beleuchtungseinrichtung,

Figuren 15 bis 17 Einzelheiten der in Figur 14 gezeigten Steckverbindung,

Figur 18 einen Teil des Spritzhandstückes im montierten Zustand, teilweise im Längsschnitt, enthaltend eine weitere Ausführungsform einer Beleuchtungseinrichtung.

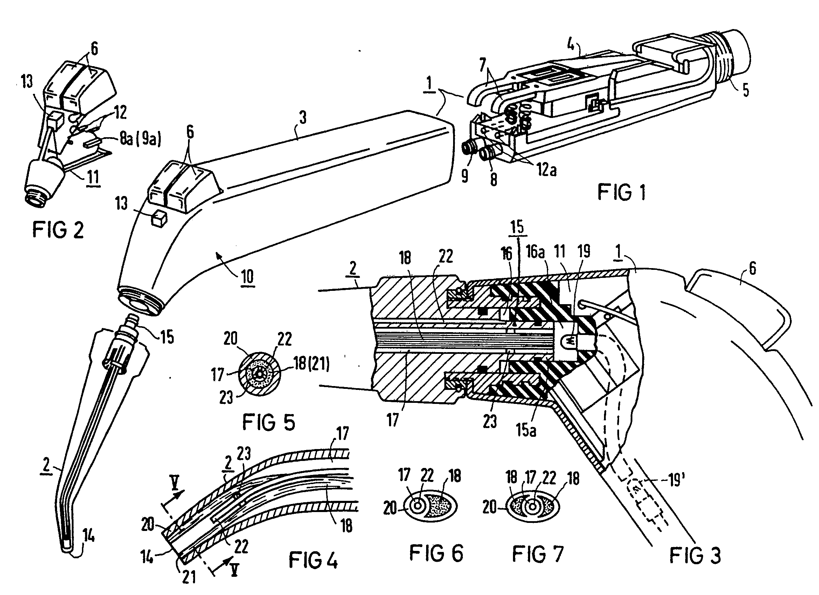

Die Figur 1 zeigt das erfindungsgemässe Spritzhandstück in teilweise zerlegtem Zustand in einer schaubildlichen Darstellung. Das Spritzhandstück besteht im wesentlichen aus einem Griffkörper 1 und einer drehbar und axial leicht lösbar gehaltenen Düse 2. Die Griffhülse 3, welche das Gehäuse des Griffkörpers bildet, enthält einen im abgezogenen Zustand dargestellten Ventileinsatz 4, an dessen rückwärtigem Ende ein Anschluss 5 für einen nicht dargestellten Versorgungsschlauch vorgesehen ist. Der Ventileinsatz 4 enthält nicht näher dargestellte Ventile zur Steuerung des Durchflusses der Medien Luft und Wasser sowie Heizelemente zur Erwärmung der Medien. Die Betätigung der Ventile und Schalter für die Heizer erfolgt mittels der aus der Griffhülse 3 vorstehenden, nebeneinander angeordneten Drucktasten 6, die auf Übertragungsglieder 7 im Ventileinsatz 4 wirken, welche wiederum die Ventile bzw. elektrische Schaltkontakte schalten. Die Zufuhr der Medien Luft und Wasser erfolgt in bekannter Weise über Leitungen, deren Enden im Ventileinsatz mit 8 und 9 bezeichnet sind.

Im Bereich der durch den Pfeil 10 angegebenen Knickstelle, also des Übergangs vom geraden zum abgewinkelten Teil der Griffhülse, ist ein im montierten Zustand mit dem Ventileinsatz 4 gekuppeltes, in Figur 2 schaubildlich dargestelltes Zwischenstück 11 vorgesehen. Die Kupplung erfolgt durch eine Steckverbindung zwischen einerseits den Leitungsenden 8, 9 und entsprechend vorgesehenen Bohrungen 8a, 9a im Zwischenstück 11.

Mit 12 sind elektrische Steckkontakte bezeichnet, die im gekuppelten Zustand in entsprechend ausgebildete Buchsen 12a des Ventileinsatzes 4 eingreifen und so die notwendige Kontaktierung für den Betrieb einer im Inneren des Zwischenstückes angeordneten elektrischen Lampe herstellen. Mit 13 ist schliesslich noch ein Lichtschalter bezeichnet, mit dem die später noch näher erläuterte Beleuchtungseinrichtung ein- und ausgeschaltet werden kann. Der Lichtschalter 13 ist unmittelbar benachbart den Tasten 6 für Luft und Wasser angeordnet, und zwar in Richtung auf die Düse 2, wodurch eine besonders gute Betätigung gegeben ist.

Die Düse 2 enthält an der der Medienaustrittsstelle 14 gegenüberliegenden Seite einen in an sich bekannter Weise im Durchmesser abgestuften und mit O-Ringen versehenen Zapfen 15, über den die Medien Luft, Wasser und Licht vom Griffkörper 1 übernommen werden.

Die Medienführung wird anhand der nachfolgenden Figuren näher erläutert.

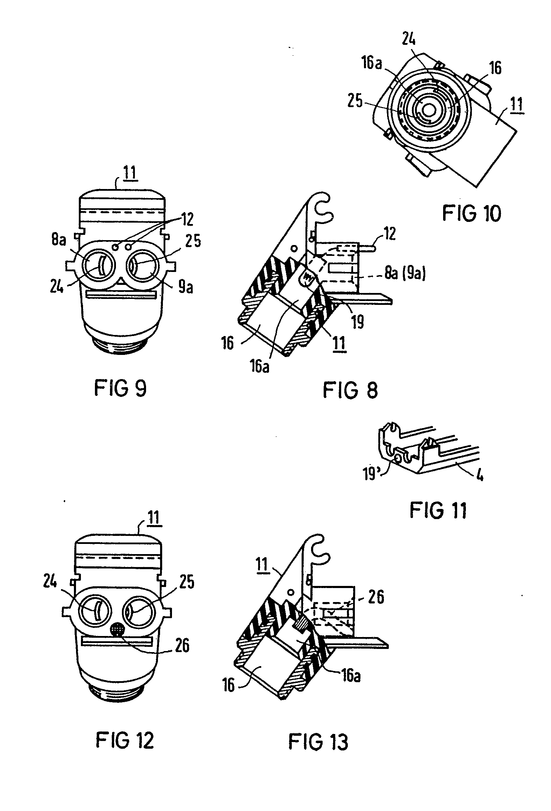

Die Figur 3 zeigt in einer vereinfachten Ausführung Düse 2 und Griffkörper 1 im Bereich der Knickstelle 10 im montierten Zustand. Der Zapfen 15 greift in einen entsprechend ausgebildeten Hohlraum 16 des Griffkörpers 1 ein, wobei die O-Ringe eine Abdichtung der Hohlraumabschnitte 16, 16a bewirken. Der Zapfenabschnitt 15a, der in den Abschnitt 16a des Hohlraumes 16 eintaucht, enthält im Zentrum einen zur Durchführung von Luft vorgesehenen Kanal 17, in den ein Lichtleiter 18 eingelegt ist. Der Querschnitt des Luftkanals 17 ist entsprechend gross dimensioniert, so dass trotz des eingelegten Lichtleiters Luft in ausreichender Menge an die Düsenöffnung 14 geführt werden kann. Vorteilhafterweise ist der Lichtleiter 18 mittels Stege od.dgl. im Luftkanal 17 abgestützt. Dem stirnseitigen Ende des Zapfens 15 korrespondierend ist im Griffkörper 1 bzw. in dem zu diesen gehörenden Zwischenstück 11 eine Lampe 19 angeordnet. Einzelheiten der Anordnung und Kontaktierung der Lampe ergeben sich aus den Figuren 8 bis 10.

Die Anordnung der Lampe entsprechend der Darstellung 19' ist in den Figuren 11 bis 13 näher dargestellt.

Die Figur 4 zeigt den vorderen Teil der Düse 2 im Bereich der Medienaustrittsstelle. Der zunächst im Bereich des Zapfens 15 im Querschnitt kreisförmige Lichtleiter 18 wird im Bereich der Medienaustrittsstelle konzentrisch zum Düsenrohr 20 zu einem im Querschnitt kreisringförmigen Lichtleitrohr 21 geformt. Die ebenfalls vom Zapfen 15 ausgehende Wasserleitung 22 endet gegenüber der Medienaustrittsstelle 14 etwas zurückgesetzt innerhalb des Lichtleitrohres und ist mittels Stege 23 in diesem so abgestützt, dass ein ausreichender Durchlass für die zwischen Wasserleitung 22 und Lichtleitrohr 21 strömende Luft gegeben ist, die über den Luftkanal 17 geführt ist.

Die Figur 5 zeigt die Düse im Querschnitt entlang der Linie V-V in Figur 4.

Das Ende des Lichtleiters 18 kann alternativ zu der beschriebenen Form auch die in den Figuren 6 und 7 gezeigte Form einnehmen; in beiden Ausführungsformen ist das Ende des Lichtleiters der Düsenform bzw. der Form der Medienführungskanäle angepasst. Neben dem ringförmig gestalteten Lichtleiterende mit Vorteil, dass die Düse rund gestaltet sein und den kleinstmöglichen Querschnitt erhalten kann, kann das Ende des Lichtleiters halbmondförmig ausgebildet sein oder eine ähnliche Form einnehmen. Die in Figur 7 gezeigte Anordnung mit diametral einander gegenüberliegenden sichelförmigen Lichtleiterenden hat den Vorteil, dass ein weitgehend schattenfreies Arbeiten gewährleistet ist und auch bei verdecktem einen Lichtleiterende (z.B. durch Spiegel od.dgl.) immer noch die Präparationsstelle beleuchtet ist.

Die Figuren 8, 9 und 10 zeigen das Zwischenstück 11 in drei Ansichten, wobei die Schalter 6 und 13 der besseren Übersichtlichkeit wegen nicht eingezeichnet sind. Die Figur 8, die das Zwischenstück teilweise im Längsschnitt zeigt, lässt die Anordnung der Lampe 19 im Hohlraumabschnitt 16a erkennen. Der Hohlraum 16a ist mittels eines Schlitzes 25 mit der Bohrung 9a verbunden, in die das Leitungsende 9 des Ventileinsatzes 4 eingreift. Die über die Leitung 9 ankommende Luft wird also über den Schlitz 25 in den Hohlraumabschnitt 16a geleitet, wo sie frei einmündet. Analoges gilt für den Wasserübergang; hier ist im Zwischenstück 11 ein Schlitz 24 vorgesehen, über den das Medium in den Hohlraum 16 gelangen kann.

Aus der Darstellung ist ersichtlich, dass die Kontaktstifte 12 achsparallel zu den Bohrungen 8a, 9a und demgemäss auch achsparallel zu den Leitungsenden 8 und 9 für Wasser und Luft verlaufen.

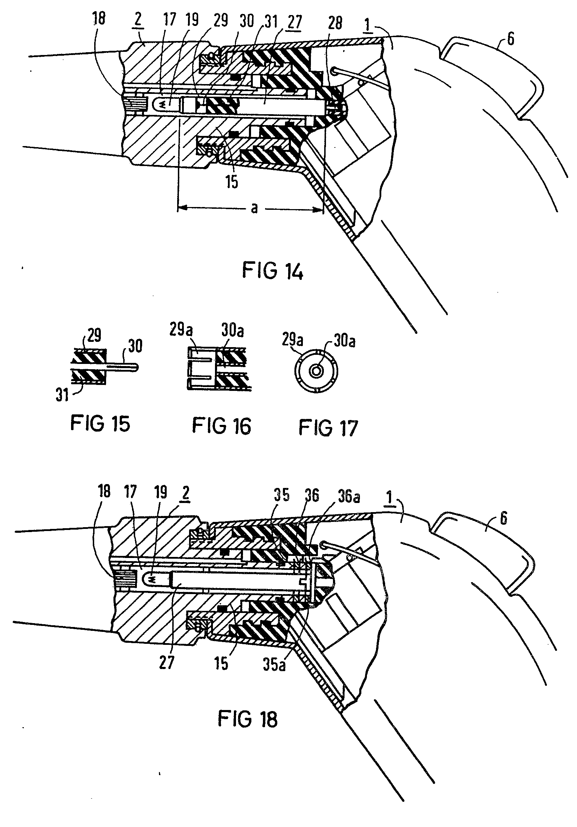

Bei der in Figur 3 gestrichelt angedeuteten Alternativlösung für die Anordnung der Lampe 19' ist diese im Ventileinsatz 4 angeordnet. Gemäss Figur 11 ist die Lampe im Ventileinsatz 4 zwischen den beiden, in der Darstellung hier nicht eingezeichneten Leitungsenden 8 und 9 angeordnet. Die Lichtübertragung von der Lampe 19' zum Lichtleiter 18 in der Düse 2 erfolgt mittels des in den Figuren 12 und 13 mit der Position 26 bezeichneten Lichtleiters, der im Zwischenstück 11 so angeordnet ist, dass das eine Ende wiederum in den Abschnitt 16a des Hohlraumes 16 mündet, das andere Ende im montierten Zustand korrespondierend der Lampe 19' gegenübersteht. Luft- und Wasserführung sind wie zuvor beschrieben ausgeführt. Die Figur 14 zeigt eine Ausführungsform, bei der die Lampe 19 mittels Halterung 17 in einer Fassung 28 des Griffkörpers 1 lösbar gehaltert ist. Die Halterung 27 besteht aus einem langgestreckten Rohr 29 aus elektrisch leitendem Material, welches mit dem einen Pol der Lampe 19 verbunden ist, einem mittig angeordneten, mit dem anderen Pol der Lampe verbundenen Kontaktstift 30 und einer Isolierung 31 dazwischen. Die Halterung 27 hat eine Länge a, die so bemessen ist, dass die Lampe relativ weit in den Zapfen 15 der Düse 2 eingreift. Die Fassung 28 ist entsprechend der Darstellung der Figuren 15 bis 17 ausgeführt. Danach greifen einerseits der gegenüber dem Rohr 29 vorstehende, zweckmässigerweise federnd ausgebildete Kontaktstift 30 in eine entsprechend ausgebildete Buchse 30a, andererseits das Rohr 29 in eine am Umfang mit mehreren Längsschlitzen und so ebenfalls federnd ausgebildete Buchse 29a ein.

Die Steckverbindung der Fassung 28 kann entweder so ausgebildet sein, dass die Halterung bei Abnahme der Düse 2 am Griffkörper verbleibt; denkbar ist auch, die Halterung 27 mit Hilfe von mit Durchbrechungen für den Durchgang der Luft versehenen elastischen Ringen im Luftkanal 17 der Düse so zu haltern, dass die durch die elastischen Ringe erzeugte Reibkraft geringfügig grösser ist als die Klemmkraft der Fassung 28, so dass beim Abziehen der Düse vom Griffkörper die Halterung 27 mit der Lampe 19 zunächst im Luftkanal 17 der Düse verbleibt. Ein Auswechseln der Lampe kann anschliessend durch axiales Herausnehmen der gesamten Halterung 27 aus dem Luftkanal erfolgen.

Die Figur 18 zeigt eine Ausführungsform, bei der die elektrische Kontaktierung zur Lampe 19, die, wie auch in Figur 14 gezeigt, relativ weit in den Luftkanal 17 der Düse 2 hineintaucht und dort einem Lichtleiter 18 korrespondierend gegenübersteht, über Schleifringe 35, 35a und auf diesen aufliegenden Federn 36, 36a erfolgt. Die Lampe ist bei dieser Ausführung also fest (unverdrehbar) mit der Düse 2 verbunden, im Gegensatz zu der Variante nach Figur 14, wo die Lampe 19 fest (unverdrehbar) mit dem Griffkörper verbunden ist.

Wenngleich in den dargestellten Ausführungsformen der im Durchmesser abgestufte Zapfen 15 bevorzugt der Düse 2 zugeordnet ist, so ist es denkbar und im Rahmen der Erfindung, den Zapfen dem Griffkörper 1 bzw. dem Zwischenstück 11 zuzuordnen und die dem Zapfen 15 angepassten Hohlräume 16 in der Düse 2 vorzusehen. Die Lampe 19 als Lichtzuführungselement befindet sich dann vorteilhafterweise wieder im Zentrum des Zapfens, der zweckmässigerweise Bestandteil des Zwischenstückes ist, was den Vorteil hat, dass eine besonders gute Zugänglichkeit zur Lampe gegeben ist. Die Lampenhalterung kann vorteilhafterweise konstruktiv bereits so gestaltet sein, dass bei sonst identischer Gestaltung der übrigen Handstückteile lediglich durch Einsatz oder Weglassen der Lampenhalterung ohne Beeinträchtigung des Medienflusses alternativ ein Spritzhandstück mit bzw. ohne Lichtübertragung vorgesehen werden kann, und zwar sowohl werksseitig oder auch nachträglich bei einem eventuellen Kundenwunsch. Zu diesem Zweck kann beispielsweise die Lampe 19 nach Art einer Patrone in der Düse 2 oder im Griffkörper 1 gehaltert sein. Das die Lampenhalterung aufnehmende Teil der Düse bzw. des Griffkörpers ist konstruktiv so weit vorbereitet, dass mit Einsetzen der Lampenhalterung die Beleuchtungseinrichtung funktionsfähig ist.

**Patentansprüche**

1. Zahnärztliches Spritzhandstück für Luft und/ oder Wasser mit einem Griffkörper (1), an dessen geradem einem Ende ein Versorgungsschlauch anschliessbar ist und an dessen geradem oder abgewinkeltem anderem Ende eine gegenüber dem Griffkörper drehbare Düse (2) an- und abkuppelbar gehaltert ist, gekennzeichnet durch eine integriert angeordnete Beleuchtungseinrichtung (18, 19, 26) mit einem vorzugsweise im Griffkörper (1) angeordneten, lichtzuführenden Element (19, 26), welches im Bereich der Kupplungsstelle von Griffkörper (1) und Düse (2) zentrisch angeordnet endet und dort im gekuppelten Zustand von Griffkörper (1) und Düse (2) dem griffkörperseitigen, ebenfalls zentrisch angeordneten Ende eines in der Düse (2) bis zur Medienaustrittsstelle (14) angeordneten Lichtleiters (18) korrespondierend gegenübersteht.

2. Spritzhandstück nach Anspruch 1, dadurch gekennzeichnet, dass der in der Düse (2) angeordnete Lichtleiter (18) in einem zur Durchführung eines der fluiden Medien, vorzugsweise von Luft, dienenden Kanal (17), durch Stützelemente (23) abgestützt, angeordnet ist.

3. Spritzhandstück nach Anspruch 1 oder 2, dadurch gekennzeichnet, dass der in der Düse (2) angeordnete Lichtleiter (18) so gestaltet ist, dass er an dem dem Griffkörper (1) zugewandten Ende einen kreisförmigen, an der Düsenöffnung dagegen kreisringförmigen Querschnitt aufweist, und dass die Austrittsöffnungen für die Medien Luft und Wasser von dem so gebildeten Lichtleitrohr (21) konzentrisch umschlossen sind.

4. Spritzhandstück nach Anspruch 3, dadurch gekennzeichnet, dass der Lichtleiter (18) etwa bündig mit der Düsenöffnung abschliesst und der Wasserleitungskanal (22) gegenüber dem Lichtleiterende zurückgesetzt endet und gegen den Lichtleiter (18) durch Stege (23) oder Stützelemente abgestützt ist, welche mit Durchbrechungen für den Durchfluss von Luft versehen sind.

5. Spritzhandstück nach Anspruch 1 oder 2, dadurch gekennzeichnet, dass das Lichtleiterende in einer den Austrittsöffnungen für Luft und Wasser im Querschnitt angepassten Form ausgebildet ist (Figuren 6 und 7).

6. Spritzhandstück nach Anspruch 1 oder 2, dadurch gekennzeichnet, dass der Lichtleiter (18) an der Düsenöffnung (14) in zwei diametral einander gegenüberliegende Lichtleiterenden aufgeteilt ist (Figur 7).

7. Spritzhandstück nach einem der Ansprüche 1 bis 6, dadurch gekennzeichnet, dass die Düse (2) oder der Griffkörper (1) an der Trennstelle in an sich bekannter Weise einen im Durchmesser abgestuften, mit Dichtungen versehenen Führungszapfen (15) enthält, der im aufgesetzten Zustand in einen entsprechend ausgebildeten Hohlraum (16) des anderen Handstückteils (1, 2) eintaucht, dass in den Abschnitt (16a) des Hohlraumes (16), in den der Zapfen (15) mit dem Ende des Lichtleiters (18) eintaucht und in dem auch das lichtzuführende Element (19) angeordnet ist, der Luftzuführungskanal (9a) frei mündet.

8. Spritzhandstück nach Anspruch 7, dadurch gekennzeichnet, dass das lichtzuführende Element (19) in einem den Hohlraum (16) zur Aufnahme des Zapfens (15) enthaltenden Zwischenstück (11) angeordnet ist, welches den Übergang vom geraden zum abgewinkelten Handstückteil bildet und der Winkellage von Griffhülse und Düse entsprechend angeordnete Medienkanäle (24, 25) aufweist und welches mittels einer Rohrsteckverbindung (8, 8a; 9, 9a) für die Medien mit einem Ventil und deren Betätigungselemente (7) sowie Heizelemente aufnehmenden Ventileinsatz (4) lösbar gehalten ist.

9. Spritzhandstück nach Anspruch 7 oder 8, dadurch gekennzeichnet, dass stirnseitig des Hohlraumes (16) eine Lampe (19) angeordnet ist, deren elektrische Anschlüsse als achsparallel zu den Rohrsteckverbindungen (8, 8a; 9, 9a) verlaufende Steckkontakte (12) ausgebildet sind.

10. Spritzhandstück nach Anspruch 9, dadurch gekennzeichnet, dass die Lampe (19) im Zwischenstück (11) auswechselbar gehaltert ist.

11. Spritzhandstück nach Anspruch 10, dadurch gekennzeichnet, dass die Halterung (27) für die Lampe (19) eine solche Länge (a) hat, dass bei auf den Griffkörper (1) aufgesetzter Düse (2) die Lampe (19) weit in den Luftkanal (17) der Düse (2) ragt und dass die Halterung (27) ihrerseits im Griffkörper (1) mittels Steckverbindung (28), die gleichzeitig auch die elektrische Verbindung herstellt, lösbar gehalten ist.

12. Spritzhandstück nach Anspruch 11, dadurch gekennzeichnet, dass die Halterung (27) aus einem mit dem einen elektrischen Pol der Lampe (19) verbundenen Rohr (29) aus elektrisch leitendem Material und einem mit dem anderen Pol der Lampe verbundenen, durch Isolierung (31) vom Rohr (29) elektrisch getrennt, im Zentrum angeordneten, gegen das Rohrende etwas vorstehenden Kontaktstift (30) besteht und diese Teile (29, 30) zusammen die eine Hälfte einer Fassung (28) bilden, deren andere Hälfte in Form von federnden Hülsen (29a; 30a) im Griffkörper (1) angeordnet ist.

13. Spritzhandstück nach einem der Ansprüche 1 bis 8, dadurch gekennzeichnet, dass im Zwischenstück (11) ein Lichtleiter (26) angeordnet ist, dessen eines Ende im Hohlraum (16a) und dessen anderes Ende achsparallel zu den Rohrsteckverbindungen (8a, 9a) im Ventileinsatz (4) verlaufend endet, und dass korrespondierend zu letzterem Lichtleiterende am Ventileinsatz (4) eine elektrische Lampe (19') angeordnet ist.

14. Spritzhandstück nach einem der Ansprüche 9 bis 13, dadurch gekennzeichnet, dass an der Griffhülse (3) im Bereich von Schaltelementen (6) für die Medien Luft und Wasser ein Schaltelement (13) für die Lampe (19) angeordnet ist.

15. Spritzhandstück nach Anspruch 14, dadurch gekennzeichnet, dass das Schaltelement (13) den beiden Schaltelementen (6) für Luft und Wasser unmittelbar benachbart vorgelagert ist.

16. Spritzhandstück nach einem der Ansprüche 9 bis 15, dadurch gekennzeichnet, dass die Versorgungsspannung für die Lampe (19) von im Ventileinsatz (4) angeordneten, zur Erwärmung der Medien Luft und Wasser vorgesehenen Heizelementen abgegriffen wird.

17. Spritzhandstück nach Anspruch 1, dadurch gekennzeichnet, dass als lichtzuführendes Element eine Glühlampe (19) vorgesehen ist, die in der Düse (2) fest (unverdrehbar) angeordnet ist und deren Strom- bzw. Spannungszuführung über Schleifringe (35, 35a) und mit diesen zusammenwirkenden Kontaktfedern (36, 36a) erfolgt.

18. Spritzhandstück nach Anspruch 17, dadurch gekennzeichnet, dass die Schleifringe (35, 35a) auf dem Zapfen (15) angeordnet und Teil der Lampenfassung sind.

19. Spritzhandstück nach Anspruch 1, dadurch gekennzeichnet, dass der Griffkörper einen im Durchmesser abgestuften Führungszapfen enthält, an dem stirnseitig eine zentrisch angeordnete Glühlampe (19) gehalten ist, die bei aufgesetzter Düse der Stirnfläche eines Lichtleiters gegenübersteht, welcher von der Düsenöffnung (14) aus in der Düse verlegt ist und in einem dem Zapfen angepassten Hohlraum der Düse endet.

20. Spritzhandstück nach Anspruch 1, dadurch gekennzeicht, dass das lichtzuführende Element (19) in einem vorzugsweise patronenartig ausgebildeten Einsatzteil (27) angeordnet ist, welches im Griffkörper (1) oder in der Düse (2) leicht auswechselbar gehalten ist.

**Revendications**

1. Pièce à main de dentisterie pour la pulvérisation d'air et/ou d'eau un corps de préhension (1) à une première extrémité droite duquel est susceptible d'être accouplé un tuyau d'alimentation et à la seconde extrémité droite, mais coudée, duquel est montée, de façon à pouvoir y être accouplée ou à en être désaccouplée, une tuyère (2) qui est susceptible de tourner par rapport au corps de préhension, caractérisée par un dispositif d'éclairage (18, 19, 26) à agencement intégré, avec un élément d'amenée de la lumière (19, 26), disposé de préférence dans le corps de préhension (1), élément d'amenée de la lumière qui se termine en position centrée au niveau du point d'accouplement entre le corps de préhension (1) et la tuyère (2) et s'y trouve, à l'état d'accouplement entre le corps de préhension (1) et la tuyère (2), en face de l'extrémité, côté corps de préhension, également en position centrée et correspondante, d'un guide d'onde de lumière (18) qui est disposé dans la tuyère (2) jusqu'aux emplacements de sortie (4) des milieux.

2. Pièce à main pour pulvérisation selon la revendication 1, caractérisée par le fait que le guide d'onde de lumière (18) qui est disposé dans la tuyère (2), est disposé, en y étant soutenu par des pièces d'appui entretoises (23) dans un canal qui sert au passage de l'un des milieux fluides, de préférence de l'air.

3. Pièce à main pour pulvérisation selon la revendication 1 ou 2, caractérisée par le fait que le guide d'onde de lumière (18) qui est disposé dans la tuyère (2) est conformé de telle façon qu'il présente, à l'extrémité qui est voisine du corps de préhension (1), une section de forme circulaire et à l'extrémité voisine d'une ouverture de la tuyère, par contre, une section transversale de forme annulaire, et que les ouvertures de sortie pour les milieux tels que l'aire et l'eau sont entourées concentriquement par le tube de guide d'onde de lumière (21), ainsi formé.

4. Pièce à main pour pulvérisation selon la revendication 3, caractérisée par le fait que le guide d'onde de lumière (18) se termine à peu près au niveau de l'ouverture de la tuyère alors que le canal de conduite de l'eau (22) est en retrait par rapport à l'extrémité du guide d'onde de lumière, et est soutenu par rapport au guide d'onde de lumière (18), à l'aide d'entretoises (23) ou d'éléments d'appui, lesquels sont pourvus d'ouvertures pour le passage de l'aire.

5. Pièce à main pour pulvérisation selon la revendication 1 ou 2, caractérisée par le fait que l'extrémité du guide d'onde de lumière est réalisée avec une section transversale dont la forme est adaptée aux ouvertures de sortie pour l'air et pour l'eau (figures 6 et 7).

6. Pièce à main pour pulvérisation selon la revendication 1 ou 2, caractérisée par le fait que le guide d'onde de lumière (18) est subdivisé, au niveau de l'ouverture (14) de la tuyère, en deux extrémités de guide d'onde de lumière qui se situent diamétralement l'une en face de l'autre (figure 7).

7. Pièce à main pour pulvérisation selon l'une des revendications 1 à 6, caractérisée par le fait que la tuyère (2) ou le corps de préhension (1) comportent, au point de séparation, et de façon connue en soi, un tourillon de guidage (15) à diamètre en paliers et pourvu de moyens d'étanchéité, lequel téton de guidage pénètre, à l'état monté, dans une cavité (16), réalisée de façon correspondante, de l'autre partie de la pièce à maint (1, 2), que dans la section (16a) de la cavité (16), dans laquelle plonge le téton de guidage (15) avec l'extrémité du guide d'onde de lumière (18) et dans laquelle est également disposé l'élément (19) amenant la lumière, le canal d'induction de l'air (9a) débouche librement.

8. Pièce à main pour pulvérisation selon la revendication 7, caractérisée par le fait que l'élément (19) amenant la lumière est disposé dans une pièce intermédiaire (11) qui comporte la cavité (16) pour recevoir le téton de guidage (15), laquelle pièce intermédiaire forme la transition entre la partie droite et la partie coudée de la pièce à main et comporte des canaux (24, 25) pour les milieux, lesquels canaux sont disposés suivant la position angulaire de la douille de préhension et de la tuyère, ladite pièce intermédiaire étant reliée de façon détachable à un insert à soupapes (4), par l'intermédiaire d'une liaison tubulaire à enfichage (8, 8a; 9, 9a) pour les milieux et étant susceptible de recevoir des soupapes et leurs éléments de manœuvre (7) de même que des éléments de chauffage.

9. Pièce à main pour pulvérisation selon la revendication 7 ou 8, caractérisée par le fait que du côté frontal de la cavité (16) est disposée une lampe (19) dont les branchements électriques sont réalisés sous la forme de contacts à enfichage (12) qui s'étendent parallèlement aux liaisons tubulaires à enfichage (8, 8a, 9, 9a).

10. Pièce à main pour pulvérisation selon la revendication 9, caractérisée par le fait que la lampe (19) est montée dans la pièce intermédiaire (11) de façon à pouvoir être remplacée.

11. Pièce à main pour pulvérisation selon la revendication 10, caractérisée par le fait que le support (27) pour la lampe (19) possède une longueur (a) qui est telle que lorsque la tuyère (2) est montée sur le corps de préhension (1), la lampe (19) pénètre largement dans le canal à air (17) de la tuyère (2), et que le support (27), pour ce qui le concerne, est monté de façon détachable dans le corps de préhension (1), à l'aide d'une liaison à enfichage (28) qui établit, en même temps, également la liaison électrique.

12. Pièce à main pour pulvérisation selon la revendication 11, caractérisée par le fait que le support (27) est constitué par un tube (29) qui est relié à l'une des bornes électriques de la lampe (19) et fait avec un matériau électriquement conducteur, et par une cheville de contact qui est reliée à l'autre borne de la lampe, séparée électriquement par une isolation (31) du tube (29) et disposée au centre en débordant l'extrémité du tube, ces éléments (29, 30) formant à eux deux une moitié d'une douille (28) dont l'autre moitié est disposée dans le corps de préhension (1) sous la forme de douille élastique (29a; 30a).

13. Pièce à main pour pulvérisation selon l'une des revendications 1 à 8, caractérisée par le fait que dans la pièce intermédiaire est disposé un guide d'onde de lumière (26) dont une extrémité se termine dans la cavité (16a) et dont l'autre extrémité s'étend dans l'insert à soupape (4) parallèlement à l'axe des liaisons tubulaires à enfichage (8a; 9a), et que de façon correspondant à l'extrémité, mentionnée en dernier lieu du guide d'onde de lumière, une lampe électrique (19') est disposée au niveau de l'insert à soupape (4).

14. Pièce à main pour pulvérisation selon l'une des revendications 9 à 13, caractérisée par le fait que sur la douille de préhension (3), et dans la zone intéressant les éléments de commutation (6) pour les milieux tels que l'air et l'eau, est disposé un élément de commutation (13) pour la lampe (19).

15. Pièce à main pour pulvérisation selon la revendication 14, caractérisée par le fait que l'élément de commutatuion (13) est situé immédiatement dans le voisinage et à l'avant des deux éléments de commutation (6) pour l'air et pour l'eau.

16. Pièce à main pour pulvérisation selon l'une des revendications 9 à 15, caractérisée par le fait que la tension d'alimentation pour la lampe (19) est prélevée sur des éléments de chauffage qui sont disposés dans l'insert à soupape (4) et servant au chauffage des milieux tels que l'eau et l'air.

17. Pièce à main pour la pulvérisation selon la revendication 1, caractérisée par le fait que l'on prévoit, en tant qu'élément d'amenée de la lumière, une lampe à incandescence (19) qui est disposée de façon fixe (non rotative) dans la tuyère (2) et dont les amenées de courant ou de tension ont lieu par l'intermédiaire de bagues de grottement (35, 35a) et de ressorts de contact (36, 36a) qui coagissent avec ces bagues.

18. Pièce à main pour la pulvérisation selon revendication 17, caractérisée par le fait que les bagues de frottement (35, 35a) sont disposées sur des chevilles (15) et constituent une partie de la douille de la lampe.

19. Pièce à main pour la pulvérisation selon la revendication 1, caractérisée par le fait que le corps de préhension comporte un téton de guidage épaulé du point de vue du diamètre, téton de guidage sur la partie frontale duquel est disposée, en position centrée, une lampe à incandescence (19) qui, lorsque la tuyère est mise en place se situe en face de la surface frontale d'un guide d'onde de lumière qui est disposé dans la tuyère à partir de l'ouverture de celle-ci et qui se termine dans une cavité de la tuyère qui est adaptée audit téton de guidage.

20. Pièce à main pour la pulvérisation selon la revendication 1, caractérisèe par le fait que l'élèment d'amenée de la lumière (19) est disposé dans une pièce d'insertion réalisée, de préférence, sous la forme d'une cartouche, ladite pièce d'insertion étant montée dans le corps de préhension (1) ou dans la tuyère (2), de façon à pouvoir être facilement remplacée.

## Claims

1. Dental hand-piece for spraying air and/or water, with a handle (1), to a straight end of which, a supply hose can be attached, and to whose straight or angled other end a nozzle (2), which can be rotated in relation to the handle is detachably held, characterised by an integrally positioned lighting device (18, 19, 26) with a light-supplying element (19, 26) which is preferably positioned in the handle (1), and which ends in a central position in the region of the join of the handle (1) and nozzle (2) and, when the handle and nozzle are coupled together, is positioned correspondingly opposite the handle end of a photoconductor (18) extending centrally in the nozzle (2) as far as the exit point for the medium (14).

2. A hand-piece for spraying as claimed in Claim 1, characterised in that the photoconductor (18) positioned in the nozzle (2) is arranged in a channel (17) which serves to transport one of the fluid media, preferably air, and is supported by support components (bridges 23).

3. A hand-piece for spraying as claimed in Claims 1 or 2, characterised in that the photoconductor (18) positioned in the nozzle (2) is formed in such a way that it has a circular cross-section at the end adjacent the handle (1) and an annular cross-section, on the other hand, at the nozzle opening, and that the exit openings for the media air and water are concentrically enclosed by the light-conducting tube (21) which is so formed.

4. A hand-piece for spraying as claimed in Claim 3, characterised in that the photoconductor (18) terminates approximately flush with the nozzle opening and the water-supply channel (22) ends at a point set back in relation to the end of the photoconductor and is supported relative to the photoconductor (18) by means of bridges (23) or supporting components, which are provided with perforations for the through flow of air.

5. A hand-piece for spraying as claimed in Claims 1 or 2, characterised in that the end of the photoconductor is formed in a shape adapted incross-section to the exit openings for air and water (figures 6 and 7).

6. A hand-piece for spraying as claimed in Claims 1 or 2, characterised in that the photoconductor (18) is divided at the nozzle opening (14) into two photoconductor ends lying diametrically opposite each other (figure 7).

7. A hand-piece for spraying as claimed in one of Claims 1 to 6, characterised in that the nozzle (2) or the handle (1) contains, in a manner known per se, a guide pin (15) which is stepped in diameter and provided with seals, which guide pin (15), in the attached position, enters a suitably shaped hollow space (16) of the other part of the hand-piece (1, 2), that the air-supply channel (9a) opens freely into the part (16a) of the hollow space (16) into which the guide pin (15) with the end of the photoconductor (18) fits, and in which the light-supplying element (19) is also positioned.

8. A hand-piece for spraying as claimed in Claim 7, characterised in that the light-supplying element (19) is positioned in an intermediate piece (11) which contains the hollow space (16) for receiving the pin (15), which intermediate piece (11) forms the transistion from the straight to the angled part of the hand-piece and has media channels (24, 25) which are arranged to correspond to the angular position of handle-covering and nozzle, and which (the intermediate piece) is removably held by means of a plug and socket connection (8, 8a; 9, 9a) for the media with a valve insert for receiving valves and their operating components (7) and heating elements.

9. A hand-piece for spraying as claimed in Claims 7 or 8, characterised in that a lamp (19) is positioned on the end of the hollow space (16), the electrical connections of which are formed as plug contacts (12) which run paraxially to the socket-plug connections (8, 8a; 9, 9a).

10. A hand-piece for spraying as claimed in Claim 9, cahracterised in that the lamp (19) is removably held in the intermediate piece (11).

11. A hand-piece for spraying as claimed in Claim 10, characterised in that the support (27) for the lamp (19) has a length (a) which is such that when the nozzle (2) is set on the handle (1), the lamp (19) projects deep into the air-channel (17) of the nozzle (2) and that the support (27) itself is held in the handle (1), so as to be removeable, by means of a plug connection (28), which at the same time provides the electrical connection.

12. A hand-piece for spraying as claimed in Claim 11, characterised in that the support (27) consists of a tube (29) made of electrically conductive material connected with one electrical pole of the lampe (19) and a contact pin (30) connected with the other pole of the lamp, electrically insulated from the tube (29) by insulation, and positioned in the centre of, and projecting somewhat from the ends of, the tube, and these parts (29, 30) together form one half of a lamp socket (28), the other half of which is arranged in the form of resilient sleeves (29a; 30a) in the handle.

13. A hand-piece for spraying as claimed in one of Claims 1 to 8, characterised in that in the intermediate piece (11) a photoconductor (26) is positioned, one end of which ends in the hollow space (16a) and the other end of which ends in the valve insert (4), running paraxially to the plug and socket connections (8a, 9a), and that an electric lamp (19) is arranged on the valve insert (4), corresponding to the latter photoconductor end.

14. A hand-piece for spraying as claimed in one of Claims 9 to 13, characterised in that a switching component (13) for the lamp (19) is positioned in the handle-cover (3) in the area of switching components (6) for the media air and water.

15. A hand-piece for spraying as claimed in Claim 14, characterised in that the switching component (13) is held directly adjacent to the two switching components (6) for air and water.

16. A hand-piece for spraying as claimed in one of Claims 9 to 15, characterised in that the supply voltage for the lamp (19) is tapped off the heating elements positioned in the valve insert (4) and provided for the purpose of heating the media air and water.

17. A hand-piece for spraying as claimed in Claim 1, characterised in that an electric bulb (19) is provided as a light-supplying element, which is placed in a fixed position (so it cannot be swivelled) in the nozzle (2) and whose current and/or voltage supply takes place via sliding contact rings (35, 35a) and contact springs (36, 36a) cooperating therewith.

18. A hand-piece for spraying as claimed in Claim 17, characterised in that the sliding contact rings (35, 35a) are postitioned on the pin (15) and are part of the lamp socket.

19. A hand-piece for spraying as claimed in Claim 1, characterised in that the handle contains a guide pin stepped in the diameter, on whose front-side an electric bulb (19) is held central and which, when the nozzle is attached, is situated opposite the end surface of a photoconductor, which (the photoconductor) is laid in the nozzle from the nozzle opening (14) and ends in a hollow space of the nozzle adapted to the pin.

20. A hand-piece for spraying as claimed in Claim 1, characterised in that the light-supplying element (19) is positioned in a preferably cartridge-like insert-piece (27), which is held in the handle (1) or in the nozzle (2) so as to be easily interchangeable.

FIG 1

FIG 2

FIG 5

FIG 4

FIG 6

FIG 7

FIG 3

0 138 119

FIG 10

FIG 9

FIG 8

FIG 11

FIG 12

FIG 13

FIG 14

FIG 15  FIG 16  FIG 17

FIG 18